# EUROPEAN PATENT APPLICATION

(11) **EP 4 152 435 A1**
(43) Date of publication of application: **22.03.2023**
(21) Application number: 21824859.9
(22) Date of filing: 08.06.2021
(51) Int. Cl.: H01M 4/13, H01M 4/136, H01M 4/36, H01M 4/60, H01M 4/583, H01M 4/62, H01M 4/66, H01M 10/05

(54) **ORGANIC SECONDARY ELECTRODE AND ORGANIC SECONDARY BATTERY**

(30) Priority: 17.06.2020 KR 20200073394
(71) Applicant: Kim, Jae Kwang, Cheongju-si, Chungcheonbuk-do 28317 (KR)
(72) Inventor: Kim, Jae Kwang, Cheongju-si, Chungcheonbuk-do 28317 (KR)
(74) Representative: BCKIP Part mbB
(86) International application number: PCT/KR2021/007115
(87) International publication number: WO 2021/256759

(57) **Abstract**

The present invention is a technology for replacing a lithium ion secondary battery using an inorganic material, which is currently commercially available, and is a technology for constructing a secondary battery using an organic material as an electrode material. The organic electrode has a disadvantage in that the actual energy density is low because it has to include a large amount of carbon-based conductor in the electrode due to poor electrical conductivity. In order to overcome this drawback, in the present invention, the loading amount of the organic active material in the electrode is increased by filling the pores of the carbon structure body, such as porous activated carbon, with an organic electrode material and coating the outside of the carbon structure body with an organic electrode material. In addition, by using a carbon material current collector instead of the conventional metal current collector such as Al or Cu, a flexible and binder-free organic electrode was fabricated to increase the loading amount, reduce the weight of the battery, and improve the electrochemical properties.

## Description

### [Technical Field]

The present invention relates to an organic electrode and an organic secondary battery. The secondary battery of the present invention has an organic secondary electrode in the form of a carbon structure body-organic active material composite. In the carbon structure body-organic active material composite of the present invention, the organic active material may be applied to the inside of the carbon structure body having a hexagonal carbon arrangement and the outer wall of the carbon structure body. The carbon structure body-organic active material composite of the present invention may have empty pores in the carbon structure body having a hexagonal carbon arrangement, so that the pores in the carbon structure body may be filled with the organic active material, and the organic active material may also be applied on the outer wall of the carbon structure body. In the secondary battery of the present invention, an organic material having one or two 2,2,6,6-tetramethyl-1-piperidinyloxy (TEMPO) functional groups in an organic molecular structure or a polymer monomer may be used as an electrode material.

### [Background Art]

The present invention is a technology for replacing a lithium ion secondary battery using an inorganic material that is currently commercially available. Currently commercial lithium ion secondary batteries use inorganic materials of lithium compounds as electrode materials. As the lithium secondary battery market expands, the price of lithium raw materials is rising rapidly, and it is difficult to dispose or recycle the lithium raw materials, causing environmental pollution. In addition, the lithium secondary battery has limitations in its application to electric vehicles due to poor fast charging characteristics.

The present invention makes a secondary battery using an organic material as an electrode material. Organic secondary batteries using organic electrodes do not use lithium raw materials, so they are environmentally friendly, easy to recycle or discard, and light in weight. An organic secondary battery using an organic electrode is capable of high power and highspeed charging (within 10 minutes). An organic secondary battery using an organic electrode can significantly reduce production cost. The organic secondary battery, however, has a disadvantage in that the energy density is low because it has to include a large amount of a carbon conductor in the electrode due to poor electrical conductivity.

Unlike the conventional inorganic electrode active material, the organic electrode active material undergoes oxidation-reduction reaction through the interaction of ions. A p-type organic material interacts with an anion and is mainly used as a positive electrode, and an n-type organic material interacts with a cation and is mainly used as a negative electrode. These organic electrode active materials have a conjugated amine, an organosulfide, a nitroxyl radical, a conjugated carbonyl structure, and the like.

Most organic electrodes are made of a conductive polymer that undergoes an electrochemical oxidation-reduction reaction through delocalized π-electrons, for example, polyaniline, polypyrrole, and the like. However, the conductive polymer electrode has poor electrochemical properties. Therefore, organic electrode materials containing free radicals in the molecular structure have been developed. As one of these organic electrode materials, a secondary battery using poly(2,2,6,6-tetramethylpiperidinyloxy-4-ylmethacrylate) (PTMA) represented by the following chemical formula 1 as a positive electrode active material is known.

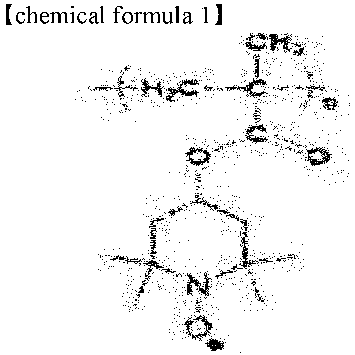

In the case of the above PTMA, although it has 2,2,6,6-tetramethyl-1-piperidinyloxy (TEMPO) in its repeating unit, its theoretical capacity is only 110 mAh/g because its molecular weight is high. In addition, there is a problem that the organic battery operates only when 50 wt% or more of a carbon conductor is added. There is also the problem of high self-discharge. An organic secondary battery using PTMA as an organic active material generally constitutes an organic electrode with 40 wt% of an organic active material, 50 wt% of a carbon conductor, and 10 wt% of a binder.

In order to improve the low electrical conductivity of an electrode material for an organic secondary battery, a technique for manufacturing an electrode by simply mixing an organic active material with a carbon nanotube or coating an organic active material on an outer wall of a carbon nanotubes is known. This technique may improve the electrical conductivity. This technique, however, has a problem in that the organic active material is dissolved in the electrolyte and the phenomenon of self-discharge cannot be prevented. In addition, in an electrode configuration including a large amount of organic active material, there is a problem in that a nonconducting layer is formed due to the organic active material, thereby deteriorating electrochemical properties.

In order to solve this problem, a technique for manufacturing an organic electrode by filling an organic active material inside a carbon nanotube, which is a carbon structure body, has been proposed. The organic active material inside the carbon nanotube improves the stability and electrochemical performance of the organic secondary battery by forming the organic active material-carbon nanotube complex with the carbon nanotube.

### [Disclosure]

### [Technical Problem]

One of the challenges of the present invention is to compose the electrode with an organic active material, whose amount is 60% by weight or more, resulting in the electrode does not include lithium atoms. The electrode of the present invention increases the loading amount of the organic active material in the electrode, thereby increasing the energy density than the conventional organic secondary battery and improving the electrochemical properties.

Another challenge of the present invention is to use a carbon-based current collector instead of a metal current collector to make an organic secondary battery that bends freely, has a high loading amount of an organic active material and excellent electrochemical properties.

Conventional organic electrodes used carbon nanotubes as a carbon structure body. However, carbon nanotubes have a problem of increasing the price of organic secondary batteries because they are expensive.

### [Technical Solution]

The structure of a conventional organic electrode is an organic active material-carbon nanotube composite in which an organic active material is filled inside the carbon nanotube. The reason why the organic active material is filled only inside the carbon nanotube is that when the organic active material is also applied to the outside of the carbon nanotube, the organic active material is dissolved in the electrolyte and self-discharge occurs.

The present invention increases the loading amount of an organic active material in the electrode by filling the inside of a carbon structure body such as a carbon nanotube with an organic active material and applying an organic active material on the outside of the carbon structure body. The organic active material on the inside of the carbon structure body and the organic active material on the outside of the carbon structure body may be the same or different. The loading amount is the mass of the pure electrode material per unit area of the electrode. As a unit of the loading amount, g/cm² can be used.

The present invention forms a pi-pi bond between the carbon structure body and the organic active material and solves the problem that the organic active material outside the carbon structure body dissolves in the electrolyte and causes self-discharge. The carbon structure body of the present invention may have a hexagonal carbon arrangement. The carbon structure body of the present invention may have a particle structure having a hexagonal carbon arrangement and pores therein. If the carbon structure body has pores, the organic active material may easily adhere to the inside and outer walls of the carbon structure body. When the hexagonal atomic arrangement structure of the carbon structure body and the aromatic ring of the organic active material form a pi-pi bond, the organic active material outside the carbon structure body does not dissolves in the electrolyte due to the pi-pi interaction. For this pi-pi interaction, it is preferable that the molecular structure of the organic active material has an aromatic ring such as a benzene ring.

In the electrode of the present invention, an activated carbon is used instead of a carbon nanotube as a carbon structure body to manufacture a low-cost organic secondary battery, and an electrode in which the inside and outside of the pores of the activated carbon are filled with an organic active material can be manufactured. An activated carbon has a specific surface area of more than 800 m²/g and has a very low price. The large specific surface area of the activated carbon can increase the loading amount of organic electrode materials, thereby increasing the energy density of the battery.

In the present invention, by using a carbon-based current collector instead of a metal current collector, the weight of the entire battery can be decreased and the loading amount of the organic active material can be further increased. The organic secondary battery made in this way bends freely (flexible) and has excellent electrochemical properties while having a high loading amount of the organic active material.

### [Advantageous Effects]

According to the present invention, various eco-friendly secondary batteries can be manufactured instead of the conventional secondary batteries that use inorganic materials. The present invention can increase the loading amount of the organic active material and electrochemical characteristics of the organic secondary battery by coating the organic electrode material on the outside as well as the inside of the carbon structure body in order to solve problems such as low energy density originating from the low loading amount of the organic secondary battery. The present invention can solve the problem of self-discharge by increasing the bonding force between the carbon structure body and the organic active material. In the present invention, a loading amount can be further increased by using a carbon-based current collector instead of a metal current collector.

### [Description of Drawings]

Figure 1 is an electrochemical mechanism of a PTVE organic electrode material containing TEMPO. The upper chemical formula shows a one-step reaction, and the lower chemical formula shows a two-step reaction.
Figure 2 is a TEM photograph and an EDS photograph in which the outside and inside pores of an activated carbon is filled with a PTVE organic electrode material.
Figure 3 is a SEM photograph of a PTVE-CNT composite in which PTVE is dissolved in N-Methyl-2-pyrrolidone (NMP) to fill the pores in the carbon nanotube (CNT) by concentration difference diffusion. A part of the PTVE is coated on the outer wall of the carbon nanotube.
Figure 4 is a graph showing the TEM element analysis of the PTVE-CNT composite and the carbon (C) distribution density along the horizontal line.
Figure 5 is a charge-discharge curve of an organic secondary battery using a PTVE-CNT composite electrode.
Figure 6 is a graph showing the lifespan characteristics of an organic secondary battery using a PTVE-CNT composite electrode.
Figure 7 is a TGA graph of the PTVE-CNT complex.
Figure 8 is an SEM photograph of a porous carbon structure body made by carbonizing a polymer.
Figure 9 is a SEM photograph of a porous carbon structure body of which inside is filled with PTVE and of which outside is coated with PTVE.
Figure 10 is a charge-discharge curve of a battery using PIPO-TEMPO as an electrode active material.
Figure 11 is a self-discharge test graph of an organic secondary battery composed of a conventional organic electrode and an organic secondary battery composed of a PTVE-CNT composite.
Figure 12 is a charge-discharge curve of an organic secondary battery in which only the inside of the carbon nanotube is filled with PTMA and the organic secondary battery in which the inside of the carbon nanotube is filled with PTMA and the outside is also coated with PTMA.
Figure 13 is a SEM photograph of an organic electrode prepared by applying PTMA to a CNT paper current collector.
Figure 14 is a photograph showing flexible characteristics of the PTMA-CNT current collector composite electrode.
Figure 15 is a charge-discharge curve of an organic secondary battery using a PTMA-CNT current collector composite electrode.
Figure 16 is a graph showing the lifespan characteristics of an organic battery composed of a PTVE-activated carbon composite electrode.
Figure 17 is an XPS graph showing the pi-pi interaction between PTVE on the outer wall of activated carbon and activated carbon.

### [Best Mode for Invention]

Hereinafter, the present invention will be described in more detail.

The present invention can be implemented in the following forms.
1. An organic secondary electrode in the form of a composite of a carbon structure body having a hexagonal arrangement of carbon atoms and an organic active material, wherein the carbon structure body is filled with the organic active material inside, the organic active material is also applied to an outer wall of the carbon structure body, the organic active material applied to the outer wall of the carbon structure body has an aromatic ring, and thus has a pi-pi interaction with the carbon structure body, and the organic active material undergoes an electrochemical oxidation-reduction reaction through interaction with a cation or anion in the electrolyte.
2. The organic secondary electrode according the first aspect invention, wherein the carbon structure body has empty pores in the carbon structure body, so that the pores in the carbon structure body are filled with the organic active material, and the organic active material is also applied to the outer wall of the carbon structure body.
3. The organic secondary electrode according to the first or second aspect invention, wherein the carbon structure body is an activated carbon, a graphene, a carbon nanotube, an acetylene black, an amorphous carbon, a natural graphite, an artificial graphite, a carbon black, a Ketjen black, a vapor-grown carbon fiber (VGCF) or a combination thereof.
4. The organic secondary electrode according to the first or second aspect invention, wherein the organic active material is at least one selected from the group consisting of a conjugated hydrocarbon, a conjugated amine, a conjugated thioether, an organodisulfide, a thioether, a nitroxyl radical, a conjugated carbonyl, a sulfonyloxy radical structure, and a derivative thereof.
5. The organic secondary electrode according to any aspect invention of first aspect invention to fourth aspect invention, wherein the organic active material is an organic material of which aminooxy anion is converted to a nitroxide radical moiety and the nitroxide radical moiety is converted to an oxoammonium cation during charge, and the oxoammonium cation is converted to the nitroxide radical moiety and the nitroxide radical moiety is converted to the aminooxy anion during discharge.
6. The organic secondary electrode according to any aspect invention of first aspect invention to fifth aspect invention, wherein the organic active material is included in an amount of 60 wt% to 95 wt% based on the total weight of the organic secondary electrode.
7. The organic secondary electrode according to any aspect invention of first aspect invention to sixth aspect invention, wherein the organic active material is at least one selected from chemical formula 2 to chemical formula 9 below. 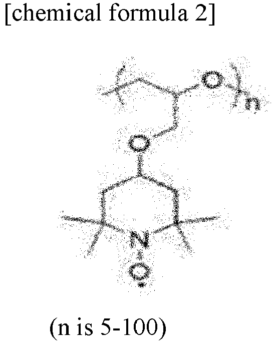 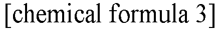 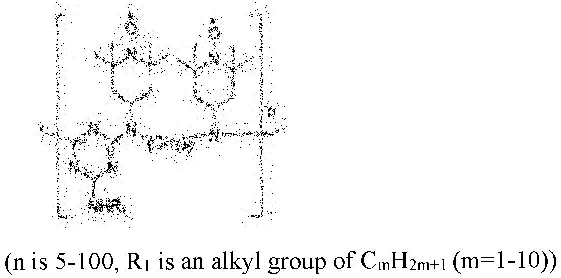 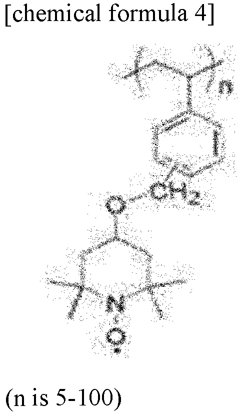 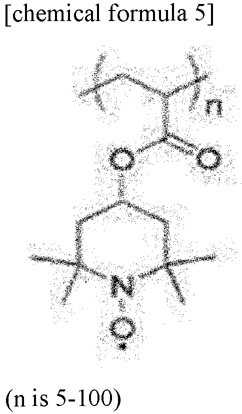 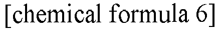 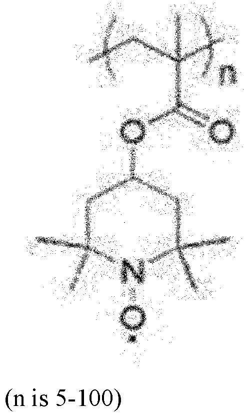 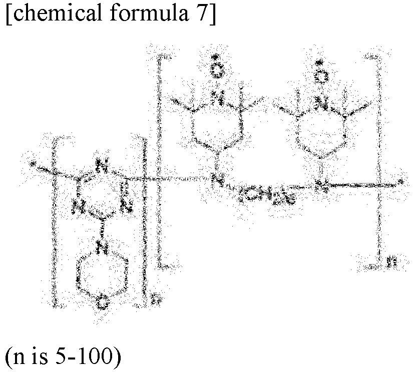 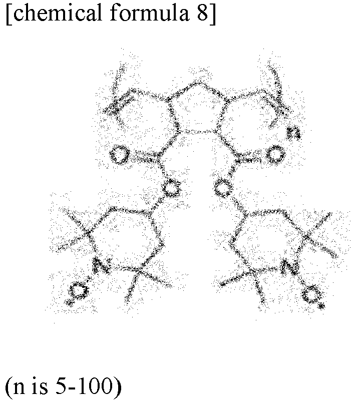 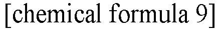 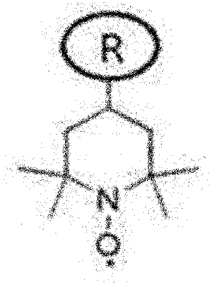 (TEMPO supported on the polymer of chemical formula 9 is a compound in which one or more TEMPO moieties are bonded to an organic or inorganic polymer support R, and R is polystyrene, polyacrylate, polymethacrylate, polyacrylamide, polyvinyl ether, polyether, polynorbornene, polyethylene glycol, silica, or a copolymer thereof.)
8. The organic secondary electrode according to any aspect invention of first aspect invention to seventh aspect invention, wherein the organic active material is a material having two aromatic rings in an organic molecule or a polymer monomer.
9. The organic secondary electrode according to any aspect invention of first aspect invention to eighth aspect invention, wherein the organic active material is an organic material having a methylene group between two TEMPOs.
10. The organic secondary electrode according to any aspect invention of first aspect invention to nineth aspect invention, the organic secondary electrode further comprises a binder selected from the group consisting of a PVdF-based binder, a SBR-based binder, a CMC-based binder, a PI (polyimide)-based binder , polyvinyl alcohol, a carboxymethyl cellulose, a hydroxypropyl cellulose, a polyvinyl chloride, a carboxylated polyvinyl chloride, a polyvinyl fluoride, a polymer containing ethylene oxide, a polyvinylpyrrolidone, a polyurethane, a polytetrafluoroethylene, a polyvinylidene fluoride, a polyethylene, a polypropylene, a styrene-butadiene rubber, an acrylated styrene-butadiene rubber, an epoxy resin, a nylon, and a combination thereof.
11. The organic secondary electrode according to any aspect invention of first aspect invention to tenth aspect invention, wherein a carbon-based paper is used as a current collector.
12. The organic secondary electrode according to eleventh aspect invention, wherein the carbon-based paper is an activated carbon paper, a graphene paper, a carbon nanotube paper, an acetylene black paper, an amorphous carbon paper, a natural graphite paper, an artificial graphite paper, a carbon black paper, a Ketjen black paper, a vapor-grown carbon fiber paper or a combination thereof.
13. The organic secondary electrode according to twelfth aspect invention, wherein the carbon-based paper is an activated carbon paper, a graphene paper, a carbon nanotube paper, a natural graphite paper, or an artificial graphite paper.
14. The organic secondary electrode according to any aspect invention of first aspect invention to thirteenth aspect invention, wherein the content of the organic active material is 70 wt% to 95 wt% based on the total weight of the electrode.
15. The organic secondary battery comprising the organic secondary electrode according to any aspect invention of first aspect invention to fourteenth aspect invention and an electrolyte, wherein the salt used in the electrolyte is LiClO₄, LiPF₄, LiPF₆, LiAsF₆, LiTFSI, LiCF₃SO₃, Li[(C₂F₅)₃PF₃](LiFAP), Li[B(C₂O₄)₂](LiBOB), Li[N(SO₂F)₂](LiFSI), LiBeti(LiN[SO₂C₂F₅]₂), NaClO₄, NaPF₄, NaPF₆, NaAsF₆, NaTFSI, NaCF₃SO₃, Na[(C₂F₅)₃PF_{3]}(NaFAP), Na[B(C₂O₄)₂](NaBOB), Na[N(SO₂F)₂](NaFSI), NaBeti(NaN[SO₂C₂F₅]₂), or a combination thereof.

The organic active material according to an embodiment of the present invention may include at least one selected from the group consisting of a conjugated hydrocarbon, a conjugated amine, a conjugated thioether, an organodisulfide, a thioether, a nitroxyl radical, a conjugated carbonyl, and a sulfonyloxy radical structure, and a derivative thereof.

In the organic electrode of the present invention, compounds represented by the following chemical formulas 2 and 3 may be used as an organic active material. 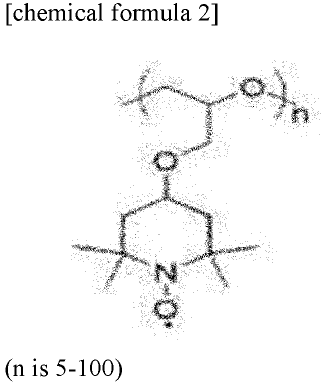 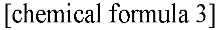 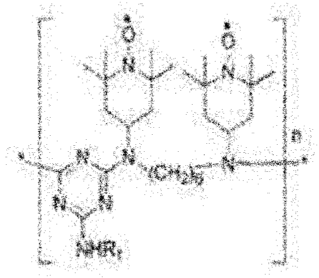 (n is 5-100, R₁ is an alkyl group of CₘH₂ₘ₊₁ (m=1-10))

Chemical formula 2 is a structure in which one electron is generated during an electrochemical reaction by attaching one 2,2,6,6-tetramethyl-1-piperidinyloxy (TEMPO) to a monomer. Chemical formula 3 is PIPO-TEMPO, a structure of an organic electrode material in which two electrons are generated by attaching two TEMPOs to a monomer. As shown in the upper chemical formula of 1, when organic electrode materials are charged, a nitroxide radical moiety is converted to an oxoammonium cation, and as shown in the lower chemical formula 1, when discharged, the oxoammonium cation is converted back to the nitroxide radical, and finally an aminooxy anion is generated in two steps. When the discharge cutoff voltage is 3.0V, one step of discharge occur, the oxoammonium cation is changed to the nitroxide radical, so that the theoretical capacity of chemical formula 2 is 120 mAh/g and the theoretical capacity of chemical formula 3 is 118 mAh/g. However, when the discharge cutoff voltage is 1.5V, two steps of discharge occur, so that the theoretical capacity of chemical formula 2 is 240 mAh/g and that of chemical formula 3 is 236 mAh/g. PTMA of chemical formula 1 has a theoretical capacity of 111 mAh/g in one-step reaction and 222 mAh/g in two-step reaction.

In addition to the compounds of chemical formulas 2 and 3, various compounds, for example, compounds of chemical formulas 4 to 8 below may be used as the organic material used in the organic electrode of the present invention.

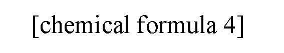

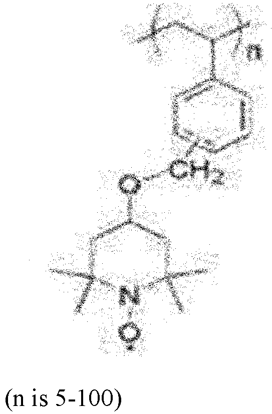

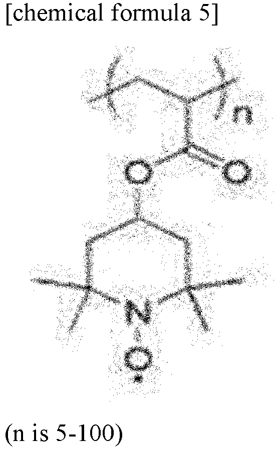

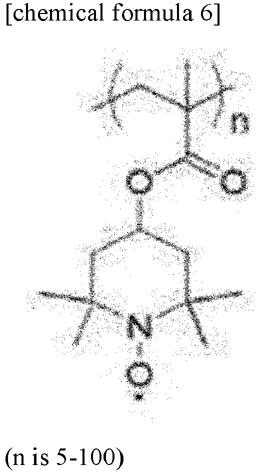

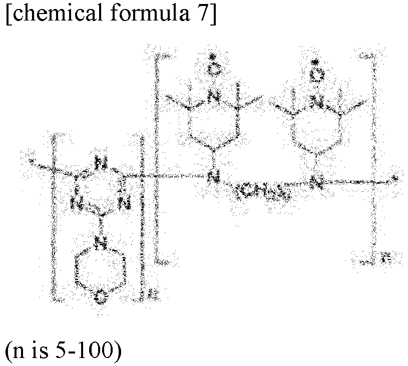

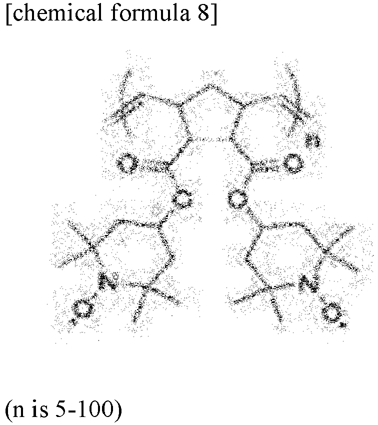

As an organic material used in the organic electrode of the present invention, a TEMPO supported on a polymer represented by the following chemical formula 9 may be used.

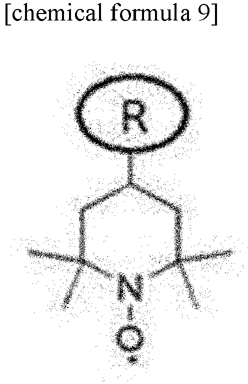

The TEMPO supported on the polymer of chemical formula 9 is a compound in which one or more TEMPO moieties are bonded to an organic or inorganic polymer support. The organic or inorganic polymer binds to the TEMPO moiety at the R position. The R may be an organic polymer such as polystyrene, polyacrylate, polymethacrylate, polyacrylamide, polyvinyl ether, polyether, polynorbornene and polyethylene glycol, an inorganic polymer such as silica, a copolymer of these organic polymers, and a copolymer of these organic polymers and inorganic polymers.

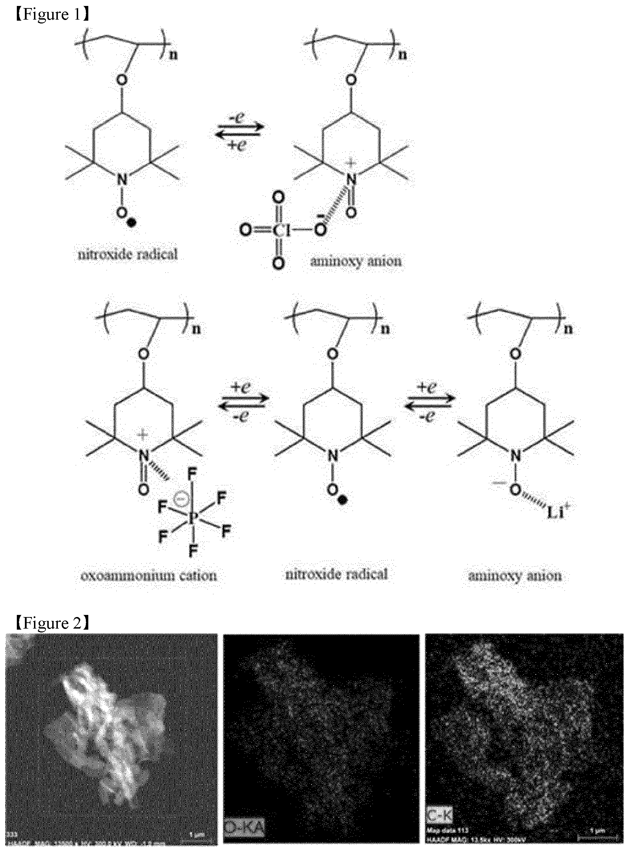

The organic electrode active material, poly(2,2,6,6-tetramethylpiperidin-4-yl-1-oxyl vinyl ether) (PTVE) also has a TEMPO functional group. Upon charging, a nitroxide radical moiety of TEMPO is converted to an oxoammonium cation. Upon discharging, the oxoammonium cation is converted back to the nitroxide radical (the upper chemical formula in FIG. 1). The theoretical capacity is 135 mAh/g, and the discharge voltage is 3.5V. However, the theoretical capacity is 270 mAh/g when the oxoammonium cation is converted to the nitroxide radical by discharge and then finally the nitroxide radical is converted to an aminooxy anion in a two-step electrochemical reaction (the lower chemical formula in FIG. 1).

These organic electrode active materials have a fast electrochemical reaction rate, so fast charging is easy, and the power is more than three times superior to that of a conventional lithium secondary battery. However, when constructing an electrode, in general, 50 wt% or more of a carbon-based material, which is a conductor, must be added because the above organic electrode active materials have low electrical conductivity. In addition, there is a disadvantage in that the above organic electrode active materials are dissolved in the electrolyte and self-discharge occurs.

In order to solve this disadvantage of the conventional organic secondary battery, in the present invention, the inside of a carbon structure body such as an activated carbon, a carbon nanotube, and a porous carbon is filled with an organic active material through a dissolution-diffusion process, and the outer wall of the carbon structure body is also coated with an organic active material, so the organic electrode whose lower limit content of the organic active material is 60 wt%, 65 wt%, 70 wt%, 75 wt%, 80 wt%, 85 wt% or 90 wt%, and upper limit content of the organic active material is 95 wt%, 90 wt%, 85 wt%, 80 wt%, 75 wt% or 70 wt% is prepared. The self-discharge is suppressed by solving the problem of the organic active material being dissolved into the electrolyte by the pi-pi interaction between the carbon material and the organic active material. The proportion of the organic active material in the electrode is preferably 60 wt% to 90 wt%, and more preferably 65 wt% to 80 wt%.

The organic active material filled in the pores in the carbon structure body and the organic active material applied on the outer wall of the carbon structure body may be the same or different.

The dissolution-diffusion process is a method in which an organic electrode material is dissolved in a solvent and then diffused into the carbon structure body to fill or apply the organic electrode material to the inside and outer wall of the carbon structure body. When the organic electrode material is dissolved in a solvent and the carbon structure body is brought into contact with this solution, the organic electrode material moves while diffusing from the high concentration bulk solution to the low concentration carbon structure body, filling the pores inside the carbon structure body and coating the outer wall.

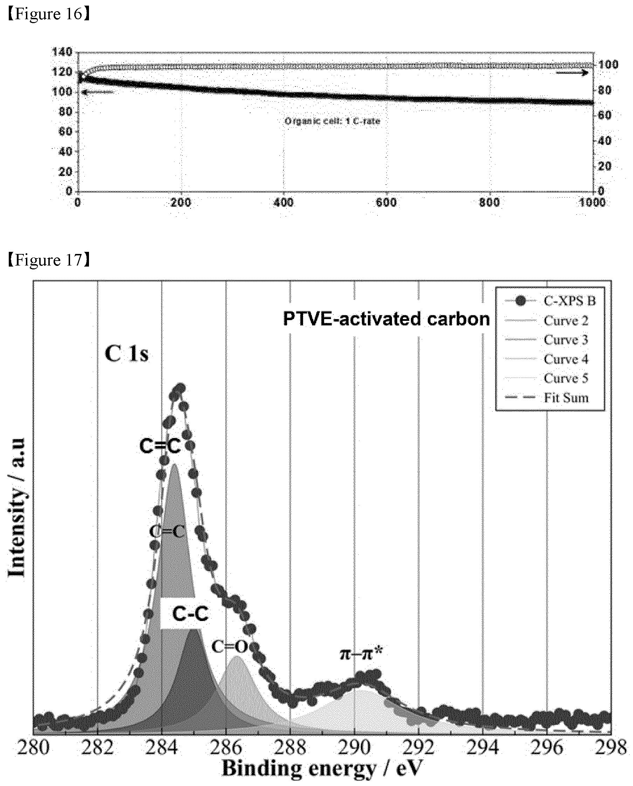

As shown in FIG. 17, there is a pi-pi interaction at a binding energy of 290 eV between the activated carbon having a hexagonal carbon arrangement and PTVE of an outer wall having an aromatic ring. Due to this, the organic active material of the outer wall does not dissolve in the electrolyte, and self-discharge is suppressed.

Figure 2 is a TEM and EDS photograph of a PTVE-activated carbon composite in which PTVE is dissolved in NMP to fill the pores in the activated carbon by concentration difference diffusion, and a part of it is coated on the outer wall of the activated carbon. From the EDS analysis, it can be seen that oxygen (O), a constituent atom of PTVE, and carbon (C) are evenly filled inside and outside the activated carbon. The PTVE is 80% by weight and the activated carbon is 20% by weight.

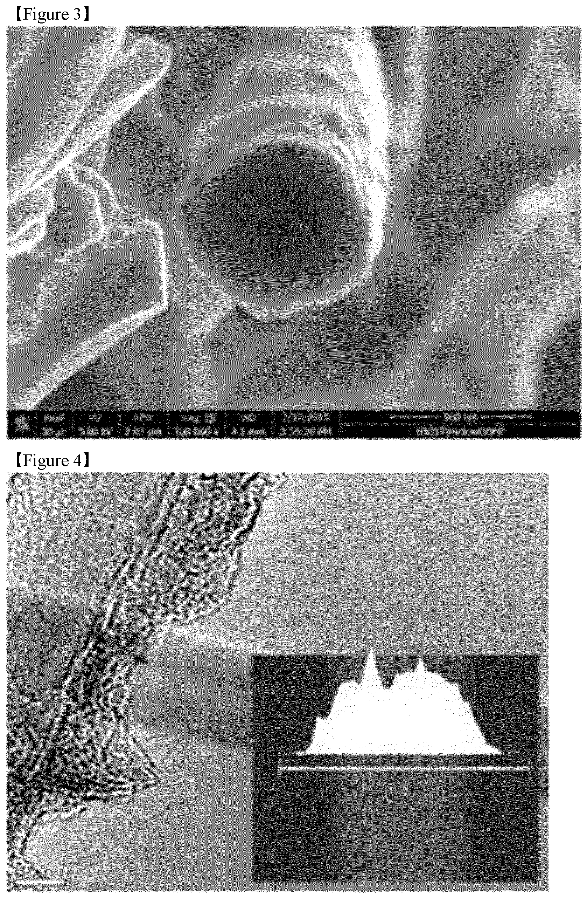

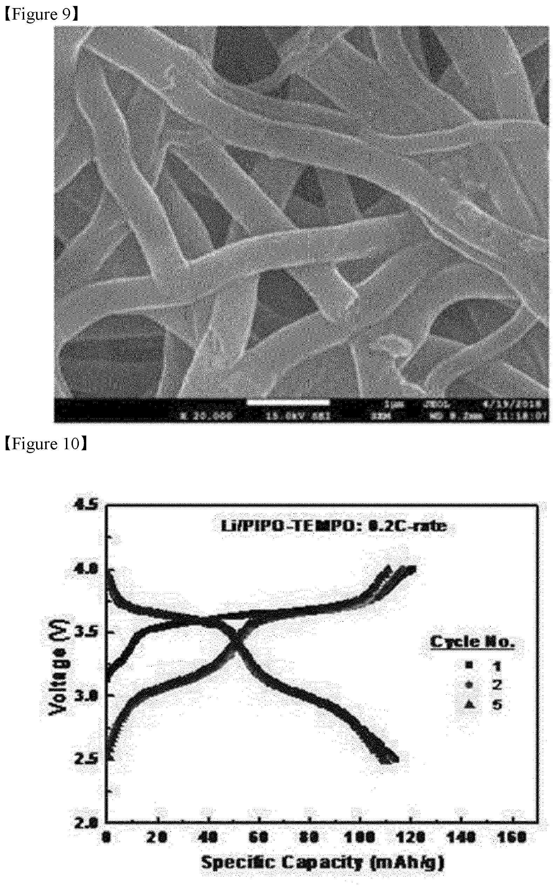

Figure 3 is an SEM photograph of a PTVE-CNT composite in which pores in a carbon nanotube is filled by dissolving PTVE in NMP and diffusion of a concentration difference, and a part of it is coated on the outer wall of the carbon nanotube. The PTVE is 80% by weight and the carbon nanotube is 20% by weight. An organic electrode was composed of 83 wt% of the thus-made PTVE-CNT composite, 7 wt% of PVdF binder, and 10 wt% of acetylene carbon black. Figure 9 is a SEM photograph of a PTVE-porous carbon composite formed by making a porous carbon using a polymer, dissolving PTVE in NMP, and filling the pores of the porous carbon by diffusion.

The organic active material may be a conductive polymer that undergoes an electrochemical oxidation-reduction reaction by interaction with a cation or anion, a molecule having a TEMPO functional group, a molecule having a quinone functional group, or a molecule having an anhydride functional group. The conductive polymer may have an aromatic carbon ring. The organic active material may be an organic material having a conjugated hydrocarbon, a conjugated amine, a conjugated thioether, an organodisulfide, a thioether, a nitroxyl radical, a conjugated carbonyl, a sulfonyloxy radical, a derivative thereof, or a combination thereof.

The carbon-based material with pores for complexing with the organic active material may be an activated carbon, a graphene, a carbon nanotube, an acetylene carbon black, an amorphous carbon, a natural graphite, an artificial graphite, a carbon black, a Ketjen black, a vapor-grown carbon fiber (VGCF) or a combination thereof.

The binder may be a PVdF-based, SBR-based, CMC-based, PI (polyimide)-based, polyvinyl alcohol, carboxymethyl cellulose, hydroxypropyl cellulose, polyvinyl chloride, carboxylated polyvinyl chloride, polyvinyl fluoride, polymer having ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or a combination of thereof.

The lithium salt used in the electrolyte is LiClO₄, LiPF₄, LiPF₆, LiAsF₆, LiTFSI, LiCF₃SO₃, Li[(C₂F₅)₃PF₃](LiFAP), Li[B(C₂O₄)₂](LiBOB), Li[N(SO₂F)₂](LiFSI), LiBeti(LiN[SO₂C₂F₅]₂), or a combination thereof. An electrolyte using sodium salts may also be used. The sodium salt used in the sodium electrolyte may be NaClO₄, NaPF₄, NaPF₆, NaAsF₆, NaTFSI, NaCF₃SO₃, Na[(C₂F₅)₃PF_{3]}(NaFAP), Na[B(C₂O₄)₂](NaBOB), Na[N(SO₂F)₂](NaFSI), NaBeti(NaN[SO₂C₂F₅]₂), or a combination thereof.

As the non-aqueous organic solvent that can be used as the electrolyte, carbonate-based, ester-based, ether-based, ketone-based, or alcohol-based solvent or other polar solvent may be used. The non-aqueous organic solvent preferably has 1 to 20 carbon atoms, more preferably 1 to 15 carbon atoms, and much more preferably 1 to 10 carbon atoms.

The non-aqueous organic solvent will be described in detail. Examples of the carbonate-based solvent may be dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

Examples of the ester-based solvent may be methyl acetate, ethyl acetate, n-propyl acetate, 1,1-dimethylethyl acetate, methylpropionate, ethylpropionate, γ-butyrolactone, decanolide, valero lactone, mevalonolactone, caprolactone, and the like.

The ether-based solvent may be dibutyl ether, tetraglyme, diglyme, dimethoxyethane, 2-methyltetrahydrofuran, tetrahydrofuran, and the like.

The ketone-based solvent may be cyclohexanone, methyl ethyl ketone, and the like.

The alcohol-based solvent may be ethanol, methanol, propanol, butanol, glycerol, methylbutanol, pentanol, ethylene glycol, isopropyl alcohol, and the like.

The other polar solvent may be acetone, butadiene, and the like.

As the negative electrode of the organic secondary battery, lithium metal, sodium metal, graphite, hard carbon, soft carbon, n-type organic negative electrode, and the like may be used.

By using the carbon-based current collector instead of the metal current collector, the loading amount of the organic active material may be further increased. This is because the use of the carbon-based current collector eliminates the need to use a binder. The organic secondary battery made in this way can bend freely, have excellent electrochemical properties, and have a high loading amount of the organic active material. The carbon-based current collector may be an activated carbon, a graphene, a carbon nanotube, an acetylene black, an amorphous carbon, a natural graphite, an artificial graphite, a carbon black, a Ketjen black, a vapor-grown carbon fiber (VGCF), or a combination thereof. In particular, an activated carbon, a graphene, a carbon nanotube, a natural graphite, an artificial graphite, and the like can be used. As the organic active material, the organic active material of the present invention mentioned above may be used. An organic electrode may be manufactured by applying the organic active material to the carbon-based current collector or by applying the organic active material and acetylene black together to the carbon-based current collector. The proportion of the organic active material in the electrode can be preferably 60 wt% to 95 wt%, more preferably 70 wt% to 95 wt%, 70 wt% to 90 wt%, and 75 wt% to 90 wt%, and much more preferably 80 wt% to 95 wt%, and 80 wt% to 90 wt%. When applying the organic active material and acetylene black together, the organic active material may be used in an amount of 70 wt% to 95 wt%, preferably 80 wt% to 90 wt%. The acetylene black may be used in an amount of 5 wt% to 30 wt%, preferably 10 wt% to 20 wt%.

### specific examples

### Example 1

A carbon structure body-organic active material composite was made by a dissolution-diffusion process. 8 g of PTVE was put in 50 ml of NMP and stirred well for 30 minutes. 2 g of activated carbon was brought into contact with this solution for 2 hours. In this way, 10 g of an activated carbon-PTVE composite was prepared. 8.3 g of the activated carbon-PTVE composite, 0.7 g of PVdF binder, and 1 g of acetylene black were mixed, stirred well, and then casted to make an organic electrode (blending method).

The organic electrode thus made was analyzed by TEM and EDS. As shown in FIG. 2, the inside of the activated carbon was filled with PTVE, and the outer wall was also coated with PTVE. The organic electrode thus made was charged and discharged up to 1000 cycles. As shown in FIG. 16, the organic electrode made of PTVE and activated carbon showed stable lifespan characteristics up to 1000 cycles without abrupt deterioration in lifespan due to self-discharge. In addition, XPS analysis was performed on the thus-made organic electrode. As shown in FIG. 17, it was confirmed that pi-pi interaction existed between the activated carbon and PTVE.

### Example 2

A carbon structure body-organic active material composite was made by a dissolution-diffusion process. 8 g of PTVE was put in 50 ml of NMP and stirred well for 30 minutes. 2 g of carbon nanotube (CNT) waw brought into contact with this solution for 2 hours. In this way, 10 g of a PTVE-CNT composite was prepared. 8.3 g of the PTVE-CNT composite, 0.7 g of PVdF binder, and 1 g of acetylene black were mixed, stirred well, and then casted to make an organic electrode (blending method).

As shown in Figure 3, the inside of the CNT was filled with PTVE, and the outer wall was also coated with PTVE. Figure 4 is a graph showing the TEM element analysis of the PTVE-CNT composite and the carbon distribution density along the horizontal line. Looking at the carbon distribution density graph, it was found that there was PTVE both inside and outside the CNT.

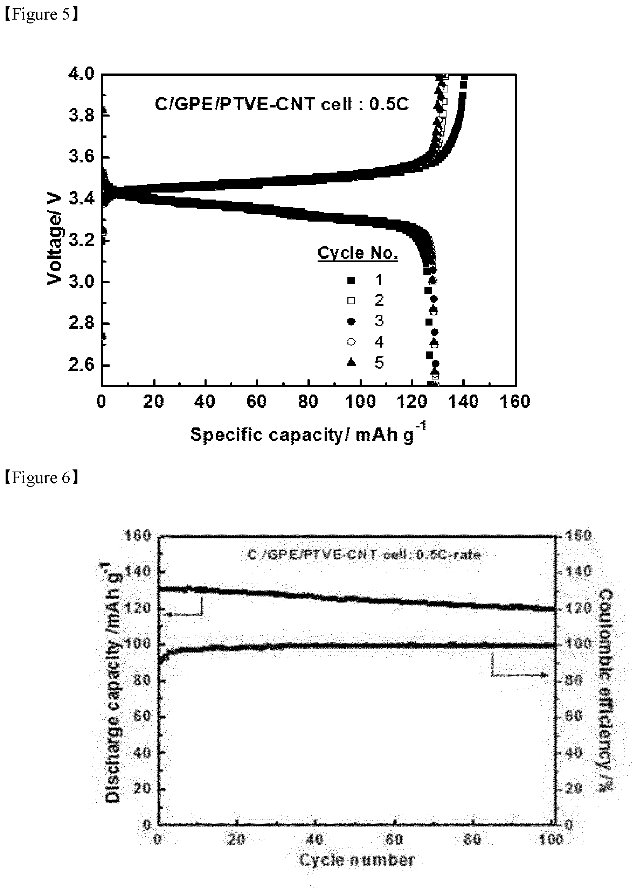

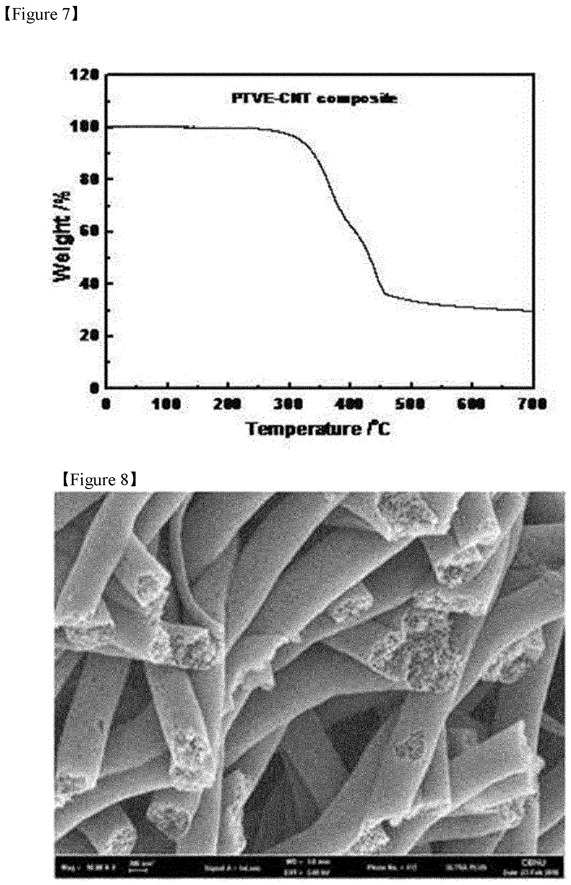

An organic secondary battery was constructed using the organic electrode of Example 2 and the graphite negative electrode. As shown in FIG. 5, a discharge capacity of 130 mAh/g was exhibited. In addition, as shown in FIG. 6, it exhibited excellent capacity retention and reversible response up to 100 cycles. Figure 7 is a TGA graph of the PTVE-CNT composite. Referring to FIG. 7, it can be seen that PTVE is decomposed at 300°C° or higher, and PTVE occupies 80% by weight in the PTVE-CNT composite (weight reduction 75%, 5% ash).

Figure 1 shows a one-step charge-discharge mechanism (top) and a two-step charge-discharge mechanism (bottom) of PTVE. The theoretical capacity of the one-step reaction is 135 mAh/g, and the theoretical capacity of the two-step reaction is 270 mAh/g. This can be controlled by setting the discharge cut-off voltage. When discharged to 3V, one-step reaction occurs, and when discharged to 1.5V, two-step reaction occurs.

### Example 3

50 g of polyvinyl alcohol (PVA) polymer was carbonized at 400°C to make a porous carbon structure body. 7.5 g of PTVE was put in 50 ml of NMP and stirred well for 30 minutes. 2.5 g of the above porous carbon structure body was brought into contact with this solution for 2 hours, so the inside of the porous carbon structure body was filled with PTVE, and the outer wall of the carbon structure body was also coated with PTVE. In this way, a PTVE-porous carbon structure body composite was made in which the internal pores of the carbon structure body were filled with PTVE and the external wall of the carbon structure body was coated with PTVE. Figure 8 is a SEM photograph of a porous carbon structure body made by carbonizing a PVA polymer. Figure 9 is a SEM photograph of a porous carbon structure body in which the inside was filled with PTVE and the outer wall of the porous carbon structure body was coated with PTVE.

### Example 4

A composite was prepared using CNT and PIPO-TEMPO having two nitroxide radicals. The composite thus-made was used as an organic electrode. The molecular structure of PIPO-TEMPO is chemical formula 3. 8g of PIPO-TEMPO was put in 50 ml of NMP and stirred well for 30 minutes. 2 g of CNT was brought into contact with this solution for 2 hours. In this way, 10 g of a PIPOTEMPO-CNT composite was prepared. 8.3 g of PIPOTEMPO-CNT composite, 0.7 g of PVdF binder, and 1 g of acetylene black were mixed, stirred well, and then casted to make an organic electrode (blending method). A charge-discharge test was performed on the thus-made organic electrode. The results are shown in FIG. 10. The discharge capacity was 118 mAh/g.

### Example 5

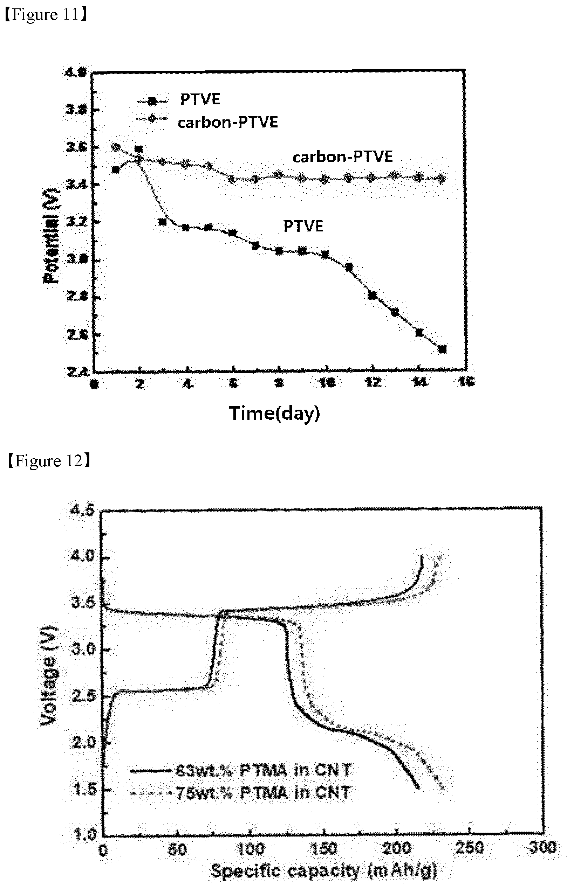

A conventional organic secondary battery was prepared by mixing 5 g of PTVE, 4 g of an acetylene carbon black precursor, and 1 g of a PVdF binder. The conventional organic secondary battery made in this way and the organic secondary battery made in Example 1 were charged up to SOC (State of Charge) 100% (4.0V), the circuit was opened to stabilize the voltage, the change in voltage over time was measured to compare self-discharge. The results were shown in FIG. 11. The conventional organic secondary battery self-discharged with a voltage drop over time, but the organic secondary battery prepared in Example 1 did not self-discharge. This is because the organic active material contained inside the activated carbon or the carbon composite does not dissolve out, and the organic active material coated on the outside also does not dissolve out due to the pi-pi interaction between the organic active material and the carbon structure body.

### Example 6

An organic secondary battery in which only the inside of the carbon nanotube was filled with PTMA was compared with an organic secondary battery in which the inside of the carbon nanotube was filled with PTMA and the outside was also coated with PTMA. 8 g of PTVE was put in 50 ml of NMP and stirred well for 30 minutes. 2 g of carbon nanotubes (CNT) were brought into contact with this solution for 2 hours. In this way, 10 g of a PTVE-CNT composite was prepared. 8 g of the PTVE-CNT composite, 1 g of PVdF binder, and 1 g of acetylene black were mixed, stirred well, and then casted to make an organic electrode (blending method). Using this organic electrode as a positive electrode and lithium as a negative electrode, an organic secondary battery was made in which the inside of the carbon nanotube was filled with PTMA and the outside was also coated with PTMA. The organic electrode prepared as above was washed with acetone to remove PTMA coated on the outside of the carbon nanotube. Using this organic electrode as a positive electrode and lithium as a negative electrode, an organic secondary battery was made in which only the inside of the carbon nanotube was filled with PTMA. The organic secondary battery in which only the inside of the carbon nanotube was filled with PTMA had a pure organic active material content of 63% by weight, and the organic secondary battery in which the inside of the carbon nanotube was filled with PTMA and the outside was also coated with PTMA had a pure organic active material content of 75% by weight. The content (%) of the organic active material was calculated as the ratio of the weight of the organic active material to the total weight of the unit area of the organic electrode. Figure 12 is a charge-discharge curve of two electrodes. As shown in FIG. 12, the organic secondary battery in which only the inside the carbon nanotube was filled with PTMA had a discharge capacity of 218 mAh/g. The organic secondary battery in which the inside of the carbon nanotube was filled with PTMA and the outside was also coated with PTMA had a discharge capacity of 230 mAh/g, which was superior to that of the organic secondary battery in which only the inside of the carbon nanotube was filled with PTMA.

### Example 7

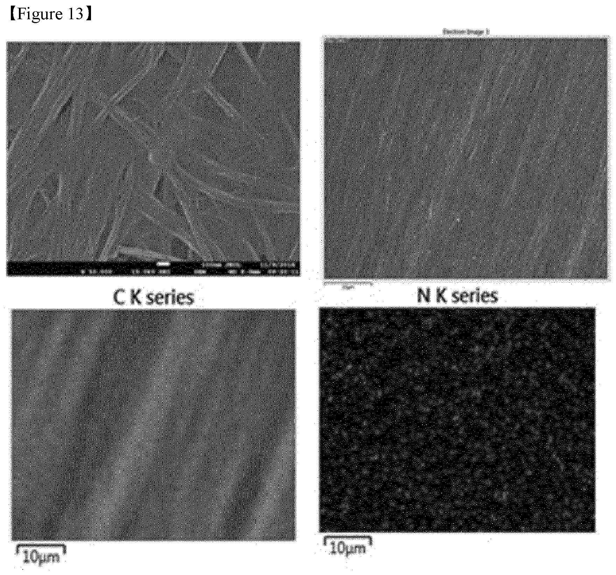

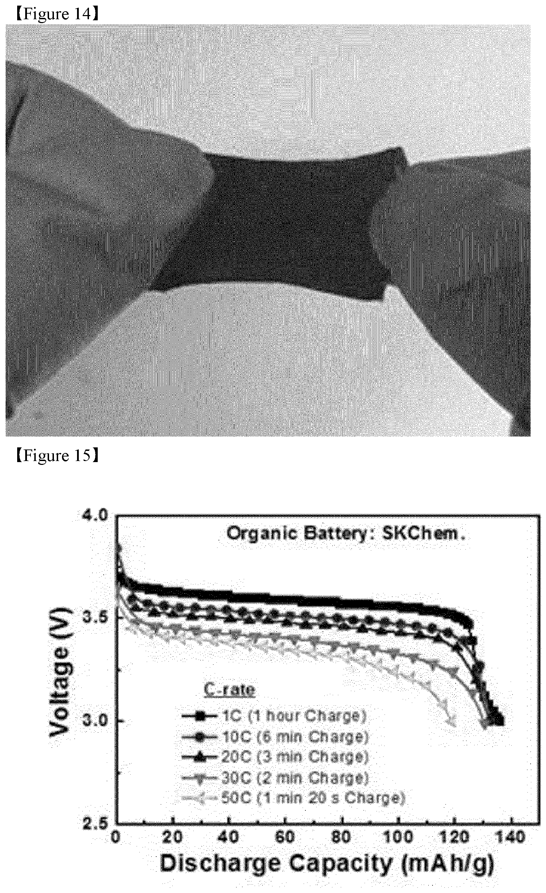

The CNT array was drawn at right angles and wound on a drum to make CNT paper (drawing winding process). An organic electrode was made by applying 10 g of PTMA to 1 g of CNT paper. An organic secondary battery was constructed using 1M LiPF₆ in EC/DMC (ethyl carbonate/dimethyl carbonate) as an electrolyte and lithium metal as a negative electrode. The content of PTMA in the electrode was 90% by weight or more. Figure 13 is an SEM photograph and elemental analysis results of the organic electrode of Example 7 prepared by applying PTMA to the CNT paper current collector. Referring to Figure 13, it can be seen that PTMA is coated on the CNT paper made of carbon. Figure 14 is a photograph showing the flexibility of the PTMA-CNT current collector composite made in this way. Figure 15 is a charge-discharge curve of an organic secondary battery using a PTMA-CNT current collector composite electrode. Referring to FIG. 15, it can be seen that the organic secondary battery of Example 7 exhibits a discharge capacity of 120 mAh/g or more without significant change even after 1 hour of charging or 1 minute and 20 seconds of charging, thereby showing excellent fast charging characteristics.

The present invention is not limited to the above embodiments and may be implemented in various other forms. Those of ordinary skill in the art to which the present invention pertains will understand that the present invention can be implemented in other specific forms without changing the technical spirit or essential features of the present invention. Therefore, it should be understood that the embodiments described above are illustrative in all respects and not restrictive.

## Claims

1. An organic secondary electrode in the form of a composite of a carbon structure body having a hexagonal arrangement of carbon atoms and an organic active material, wherein the carbon structure body is filled with the organic active material inside, the organic active material is also applied to an outer wall of the carbon structure body, the organic active material applied to the outer wall of the carbon structure body has an aromatic ring, and thus has a pi-pi interaction with the carbon structure body, and the organic active material undergoes an electrochemical oxidation-reduction reaction through interaction with a cation or anion in the electrolyte.

2. The organic secondary electrode according to claim 1, wherein the carbon structure body has empty pores in the carbon structure body, so that the pores in the carbon structure body are filled with the organic active material, and the organic active material is also applied to the outer wall of the carbon structure body.

3. The organic secondary electrode according to claim 1 or 2, wherein the carbon structure body is an activated carbon, a graphene, a carbon nanotube, an acetylene black, an amorphous carbon, a natural graphite, an artificial graphite, a carbon black, a Ketjen black, a vapor-grown carbon fiber (VGCF) or a combination thereof.

4. The organic secondary electrode according to claim 1 or 2, wherein the organic active material is at least one selected from the group consisting of a conjugated hydrocarbon, a conjugated amine, a conjugated thioether, an organodisulfide, a thioether, a nitroxyl radical, a conjugated carbonyl, a sulfonyloxy radical structure, and a derivative thereof.

5. The organic secondary electrode according to claim 1 or 2, wherein the organic active material is an organic material of which aminooxy anion is converted to a nitroxide radical moiety and the nitroxide radical moiety is converted to an oxoammonium cation during charge, and the oxoammonium cation is converted to the nitroxide radical moiety and the nitroxide radical moiety is converted to the aminooxy anion during discharge.

6. The organic secondary electrode according to claim 1 or 2, wherein the organic active material is included in an amount of 60 wt% to 95 wt% based on the total weight of the organic secondary electrode.

7. The organic secondary electrode according to claim 5, wherein the organic active material is at least one selected from chemical formula 2 to chemical formula 9 below. 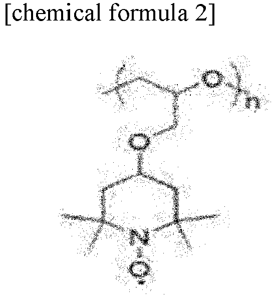 (n is 5-100) 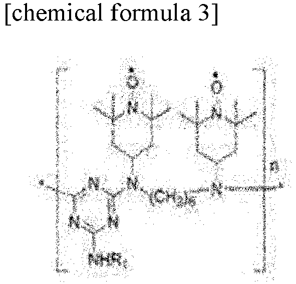 (n is 5-100, R₁ is an alkyl group of CₘH₂ₘ₊₁ (m=1-10)) 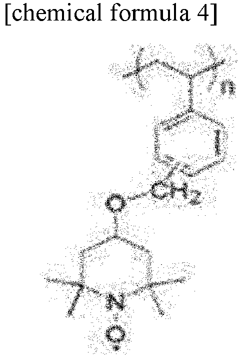 (n is 5-100) 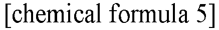 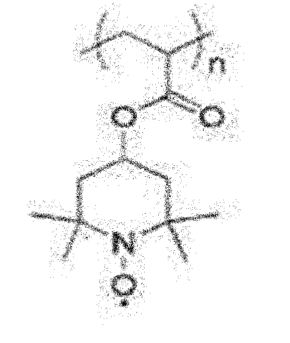 (n is 5-100) 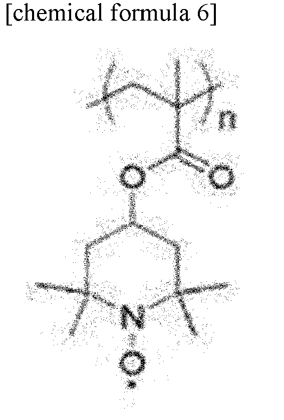 (n is 5-100) 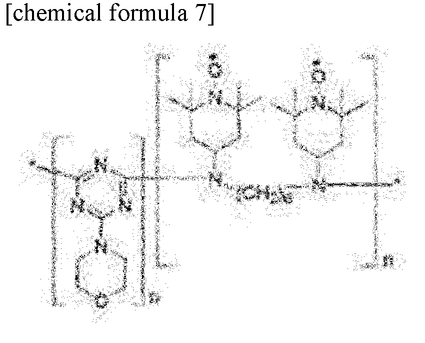 (n is 5-100) 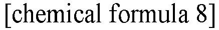 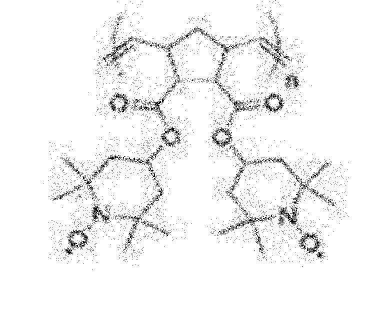 (n is 5-100) 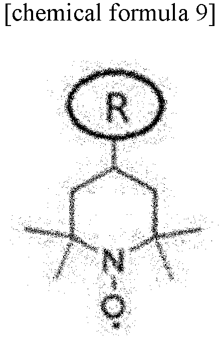 (TEMPO supported on the polymer of chemical formula 9 is a compound in which one or more TEMPO moieties are bonded to an organic or inorganic polymer support R, and R is polystyrene, polyacrylate, polymethacrylate, polyacrylamide, polyvinyl ether, polyether, polynorbornene, polyethylene glycol, silica, or a copolymer thereof.)

8. The organic secondary electrode according to claim 1 or 2, wherein the organic active material is a material having two aromatic rings in an organic molecule or a polymer monomer.

9. The organic secondary electrode according to claim 1 or 2, wherein the organic active material is an organic material having a methylene group between two TEMPOs.

10. The organic secondary electrode according to claim 1 or 2, the organic secondary electrode further comprises a binder selected from the group consisting of a PVdF-based binder, a SBR-based binder, a CMC-based binder, a PI (polyimide)-based binder, a polyvinyl alcohol, a carboxymethyl cellulose, a hydroxypropyl cellulose, a polyvinyl chloride, a carboxylated polyvinyl chloride, a polyvinyl fluoride, a polymer containing ethylene oxide, a polyvinylpyrrolidone, a polyurethane, a polytetrafluoroethylene, a polyvinylidene fluoride, a polyethylene, a polypropylene, a styrene-butadiene rubber, an acrylated styrene-butadiene rubber, an epoxy resin, a nylon, and a combination thereof.

11. The organic secondary electrode according to claim 1 or 2, wherein a carbon-based paper is used as a current collector.

12. The organic secondary electrode according to claim 11, wherein the carbon-based paper is an activated carbon paper, a graphene paper, a carbon nanotube paper, an acetylene black paper, an amorphous carbon paper, a natural graphite paper, an artificial graphite paper, a carbon black paper, a Ketjen black paper, a vapor-grown carbon fiber paper or a combination thereof.

13. The organic secondary electrode according to claim 11, wherein the content of the organic active material is 70 wt% to 95 wt% based on the total weight of the electrode.

14. The organic secondary battery comprising the organic secondary electrode according to claim 1 or 2 and an electrolyte, wherein the salt used in the electrolyte is LiClO₄, LiPF₄, LiPF₆, LiAsF₆, LiTFSI, LiCF₃SO₃, Li[(C₂F₅)₃PF₃](LiFAP), Li[B(C₂O₄)₂](LiBOB), Li[N(SO₂F)₂](LiFSI), LiBeti(LiN[SO₂C₂F₅]₂), NaClO₄, NaPF₄, NaPF₆, NaAsF₆, NaTFSI, NaCF₃SO₃, Na[(C₂F₅)₃PF_{3]}(NaFAP), Na[B(C₂O₄)₂](NaBOB), Na[N(SO₂F)₂](NaFSI), NaBeti(NaN[SO₂C₂F₅]₂), or a combination thereof.

15. The organic secondary battery comprising the organic secondary electrode according to claim 11 and an electrolyte, wherein the salt used in the electrolyte is LiClO₄, LiPF₄, LiPF₆, LiAsF₆, LiTFSI, LiCF₃SO₃, Li[(C₂F₅)₃PF₃](LiFAP), Li[B(C₂O₄)₂](LiBOB), Li[N(SO₂F)₂](LiFSI), LiBeti(LiN[SO₂C₂F₅]₂), NaClO₄, NaPF₄, NaPF₆, NaAsF₆, NaTFSI, NaCF₃SO₃, Na[(C₂F₅)₃PF_{3]}(NaFAP), Na[B(C₂O₄)₂](NaBOB), Na[N(SO₂F)₂](NaFSI), NaBeti(NaN[SO₂C₂F₅]₂), or a combination thereof.
